# DEMANDE DE BREVET EUROPEEN

(11) **EP 1 515 239 A1**
(43) Date de publication de la demande: **16.03.2005**
(21) Numéro de dépôt: 04292150.2
(22) Date de dépôt: 07.09.2004
(51) Int. Cl.: G06F 17/24, G06F 17/30

(54) **Procédé et systéme de manipulation de données issues de bases de données multidimensionnelles à l'aide d'un tableur**

(30) Priorité: 10.09.2003 FR 0310656
(71) Demandeur: GRANITE SOFTWARE, 92110 Clichy (FR)
(72) Inventeur: Koukerdjinian Francois, 95350 Piscop (FR); Jauffret Jean-Philippe, 95350 Piscop (FR)
(74) Mandataire: de Roquemaurel, Bruno

(57) **Abrégé**

Pour manipuler des données mémorisées dans une base de données multidimensionnelle (2) dans laquelle les données sont organisées selon plusieurs dimensions, ce procédé comprend des étapes consistant à : générer une requête d'extraction de données de la base de données multidimensionnelle à partir de critères de sélection introduits par un utilisateur portant sur au moins une partie des dimensions de la base de données multidimensionnelle ; exécuter la requête d'extraction de données sur la base de données multidimensionnelle pour recevoir des données de la base de données multidimensionnelle, correspondant aux critères de sélection ; mémoriser dans une base de données locale (12) les données reçues sous la forme d'un bloc de données élémentaire ; et insérer dans chacune des cellules d'un tableau d'une feuille de calcul d'un tableur (13), une formule d'affichage d'une donnée qui pointe sur une donnée respective du bloc de données élémentaire mémorisé dans la base de données locale.

## Description

La présente invention concerne la manipulation de données issues de bases de données multidimensionnelles.

Elle s'applique notamment, mais non exclusivement à la conception et la réalisation de tableaux de bord constitués sur un calculateur à partir de données structurées et auxquelles le concepteur ajoute des indicateurs complémentaires déterminés localement, les données structurées provenant d'une ou plusieurs bases de données multidimensionnelles accessibles par exemple auprès de différents serveurs par l'intermédiaire d'un réseau de transmission de données.

Une base de données multidimensionnelle présente une structure matricielle à plusieurs dimensions, chaque donnée de cette structure matricielle étant repérée de manière unique en attribuant une valeur particulière à chacune des dimensions de la structure. En outre, chaque donnée de cette structure peut être associée à d'autres informations appelées "propriétés".

Les tableaux de bords sont généralement réalisés sous la forme de feuilles de calcul gérées par un logiciel tableur, par exemple du type EXCEL de Microsoft, exécuté sur un calculateur tel qu'un ordinateur personnel. Un tel logiciel est couramment utilisé pour créer et manipuler des tableaux numériques ou alphanumériques, utilisé à des fins de gestion et d'applications scientifiques.

La réalisation d'un tel tableau de bord pose plusieurs problèmes. Tout d'abord la structure des bases de données d'où sont extraites les données insérées dans le tableau de bord, et l'organisation de ces données une fois extraites sont en général différentes de celle que l'utilisateur souhaite appliquer dans le tableau de bord. En effet, les données extraites sont "symétriques" : croisement symétrique des dimensions, tandis qu'un tableau de bord ne présente en général pas de symétrie.

Pour résoudre ce problème, on peut envisager une solution consistant à insérer dans chacune des cellules du tableau une formule de calcul consistant en une requête d'extraction d'une donnée respective de la base de données. Cette solution se révèle d'autant plus fastidieuse que la base de données se trouve sur un serveur distant accessible par un réseau. En outre, cette solution n'est pas à la portée d'un utilisateur non spécialiste car elle nécessite de connaître le langage permettant d'établir les requêtes. Cette solution entraîne également des risques importants d'erreurs d'incohérences dues à de mauvaises sélections de données, et présente des coûts d'exploitation et de maintenance importants, notamment lorsqu'il s'agit de modifier un critère de sélection pour sélectionner un autre bloc de données à extraire de la base de données.

Les solutions couramment appliquées à ce jour consistent à projeter dans un tableau de feuille de calcul, des blocs multidimensionnels extraits de la base, chaque bloc extrait étant présenté sous la forme d'un tableau croisé dans lequel les lignes et les colonnes du tableau sont associées aux dimensions du bloc, éventuellement de manière imbriquée si le bloc à projeter présente plus de deux dimensions en ligne ou en colonne.
Il s'avère que cette solution ne répond que partiellement au problème de la conception d'un tableau de bord. En effet, un tableau de bord ne vise pas simplement à présenter des données brutes issues de bases de données, mais également à appliquer des traitements à ces données. Ces traitements sont généralement définis sous la forme de formules insérées dans certaines cellules de la feuille de calcul du logiciel tableur. Si l'on modifie un critère de sélection des données projetées d'un bloc entraînant une modification de la taille du tableau projeté, les formules risquent d'être écrasées lors de la mise à jour du tableau.

Cette solution ne permet pas non plus de modifier la structure du tableau projeté, par exemple en insérant des lignes ou des colonnes supplémentaires pour y afficher des valeurs obtenues par des formules de calcul appliquées sur les valeurs du tableau.

Lorsque le tableau de bord fait appel à plusieurs blocs, cette solution ne permet pas non plus de mettre en cohérence ces blocs. En particulier, si l'on modifie un critère de sélection d'un bloc de données projeté, aucun mécanisme n'est prévu pour propager cette modification aux autres blocs.

La présente invention a pour but de supprimer ces inconvénients. Cet objectif est atteint par la prévision d'un procédé de manipulation de données mémorisées dans au moins une base de données multidimensionnelle dans laquelle des données sont organisées selon plusieurs dimensions.

Selon l'invention, ce procédé comprend des étapes consistant à :
- générer une requête d'extraction de données d'une base de données multidimensionnelle à partir de critères de sélection introduits par un utilisateur portant sur au moins une partie des dimensions de la base de données multidimensionnelle,
- exécuter la requête d'extraction de données sur la base de données multidimensionnelle pour recevoir des données extraites de la base de données multidimensionnelle et correspondant aux critères de sélection introduits par l'utilisateur,
- mémoriser dans une base de données locale les données reçues sous la forme d'un bloc de données élémentaire, et
- insérer dans chacune des cellules d'un tableau d'une feuille de calcul d'un logiciel tableur, une formule d'affichage d'une donnée qui pointe sur une donnée respective du bloc de données élémentaire mémorisé dans la base de données locale.

Avantageusement, les critères de sélection introduits par l'utilisateur pour un bloc de données élémentaire extrait sont mémorisés dans la base de données locale en association avec les données extraites et mémorisées du bloc de données élémentaire.

Selon une particularité de l'invention, ce procédé comprend des étapes de génération et d'exécution de plusieurs requêtes d'extraction de données, en fonction de critères de sélection introduits par l'utilisateur pour recevoir plusieurs blocs de données élémentaires, chacun des blocs de données élémentaires extraits étant mémorisés dans la base de données locale, et inséré sous la forme d'un tableau respectif dans la feuille de calcul en fonction des critères de sélection introduits par l'utilisateur pour chacun des blocs de données élémentaires extraits.

Selon une autre particularité de l'invention, ce procédé comprend une étape de liaison d'au moins une dimension d'un bloc de données élémentaire esclave à un bloc de données élémentaire maître, la génération de la requête d'extraction du bloc de données élémentaire esclave intégrant les critères de sélection appliqués à la dimension liée du bloc de données élémentaire maître.

Selon une autre particularité de l'invention, si la dimension liée du bloc de données élémentaire maître est elle-même liée à une dimension d'un autre bloc de données élémentaire, les critères de sélection appliqués à la dimension de l'autre bloc de données élémentaire sont appliqués à la dimension liée du bloc de données élémentaire esclave.

Selon une autre particularité de l'invention, à chaque fois qu'un critère de sélection d'une dimension liée d'un bloc de données élémentaire maître est modifié, les requêtes d'extraction des blocs de données élémentaires esclaves du bloc de données élémentaire maître sont à nouveau générées et exécutées pour mettre à jour les cellules des tableaux de données des blocs de données élémentaires insérés dans la feuille de calcul.

Selon une autre particularité de l'invention, ce procédé comprend en outre une procédure d'extension de calcul multidimensionnel à au moins une dimension d'un bloc de données élémentaire, comprenant une étape d'identification dans la feuille de calcul d'un ensemble de cellules regroupant des cellules contenant des formules d'affichage d'une donnée qui pointent sur des données respectives d'un bloc de données élémentaire, correspondant à un premier membre respectif de chacune des dimensions du bloc élémentaire pour laquelle la procédure d'extension a été activée, et des cellules insérées par l'utilisateur, et des étapes de duplication de l'ensemble de cellules identifié, effectuées pour chacun des membres de chacune des dimensions pour laquelle la procédure d'extension a été activée, chaque duplication étant effectuée en modifiant les formules d'affichage des données du bloc de données élémentaire, appartenant à l'ensemble de cellules identifié, pour insérer des données du bloc élémentaire correspondant aux membres pour lesquels la duplication est effectuée.

Selon une autre particularité de l'invention, les cellules insérées par l'utilisateur dans l'ensemble de cellules identifié contiennent au moins en partie des formules de calcul référençant des cellules de l'ensemble de cellules identifié, la duplication de l'ensemble de cellules identifié étant effectuée en mettant à jour les références des cellules figurant dans les formules de calcul insérées par l'utilisateur en fonction de l'emplacement dans la feuille de calcul où est inséré l'ensemble identifié.

L'invention concerne également un système pour la manipulation de données mémorisées dans au moins une base de données multidimensionnelle dans laquelle des données sont organisées selon plusieurs dimensions.

Selon l'invention, ce système comprend un module d'interface couplé à un logiciel tableur et ayant accès à au moins une base de données multidimensionnelle, pour extraire des blocs de données élémentaires de la base de données multidimensionnelle et les insérer dans un tableau d'une feuille de calcul du logiciel tableur, et une base de données locale dans laquelle le module d'interface range les données des blocs de données élémentaires extraits, le module d'interface comprenant :
- des moyens pour générer des requêtes d'extraction de blocs de données élémentaires de la base de données multidimensionnelle à partir de critères de sélection introduits par un utilisateur portant sur au moins une partie des dimensions de la base de données multidimensionnelle,
- des moyens pour faire exécuter par la base de données multidimensionnelle les requêtes d'extraction générées,
- des moyens pour recevoir les blocs de données élémentaires extraits et les mémoriser dans la base de données locale, et
- des moyens pour insérer dans chacune des cellules du tableau une formule d'affichage d'une donnée qui pointe sur une donnée respective du bloc de données élémentaire mémorisé dans la base de données locale.

Avantageusement, les bases de données multidimensionnelles sont accessibles au module d'interface par l'intermédiaire de réseaux de transmission de données:

Selon une particularité de l'invention, la base de données locale mémorise plusieurs blocs de données élémentaire extraits de bases de données multidimensionnelles, le module d'interface comprenant des moyens pour permettre à l'utilisateur de lier entre elles au moins une dimension d'un bloc de données élémentaire esclave à une dimension correspondante d'un bloc de données élémentaire maître, et des moyens pour intégrer les critères de sélection appliqués à la dimension liée du bloc de données élémentaire maître dans la requête d'extraction du bloc de données élémentaire esclave.

Selon une autre particularité de l'invention, le module d'interface comprend en outre des moyens pour rechercher tous les blocs élémentaires mémorisés dans la base de données locale qui comprennent au moins une dimension liée à un bloc élémentaire maître lorsqu'un critère de sélection de la dimension liée correspondante du bloc élémentaire maître est modifiée, des moyens pour générer et exécuter les requêtes d'extraction des blocs élémentaires esclaves trouvés et des moyens pour mettre à jour les cellules des tableaux de données des blocs élémentaires insérés dans la feuille de calcul, à la suite de l'exécution des requêtes d'extraction.

Selon une autre particularité de l'invention, ce système comprend en outre des moyens d'identification dans la feuille de calcul d'un ensemble de cellules regroupant des cellules contenant des formules d'affichage d'une donnée pointant sur une donnée respective d'un bloc de données élémentaire, correspondant à un premier membre respectif d'au moins une dimension du bloc élémentaire pour laquelle une procédure d'extension de calcul multidimensionnel a été activée, et des cellules insérées par l'utilisateur, des moyens de duplication de l'ensemble de cellules identifié pour chacun des membres de chacune des dimensions pour laquelle la procédure d'extension a été activée, chaque duplication étant effectuée en modifiant les formules d'affichage de données du bloc de données élémentaire, appartenant à l'ensemble de cellules identifié, pour pointer sur des données du bloc élémentaire correspondant aux membres pour lesquels la duplication est effectuée.

Selon une autre particularité de l'invention, les cellules insérées par l'utilisateur dans l'ensemble de cellules identifié contient des formules de calcul référençant des cellules de l'ensemble de cellules identifié, la duplication de l'ensemble de cellules identifié étant effectuée en mettant à jour les références des cellules figurant dans les formules de calcul insérées par l'utilisateur en fonction de l'emplacement dans la feuille de calcul où est copié l'ensemble identifié.

Un mode de réalisation préféré de l'invention sera décrit ci-après, à titre d'exemple non limitatif, avec référence aux dessins annexés dans lesquels :
La figure 1 représente un système dans lequel le procédé selon l'invention peut être exécuté ;
La figure 2 montre plus en détail un terminal du système représenté sur la figure 1, permettant de manipuler des données issues de bases multidimensionnelles ;
La figure 3 montre un exemple de partie de bloc de données élémentaire inséré dans une feuille de calcul de logiciel tableur ;
La figure 4 illustre sous la forme d'un organigramme différentes étapes mises en oeuvre par le procédé selon l'invention sur le terminal représenté sur la figure 2, pour chacun des blocs élémentaires constituant un tableau de bord à réaliser ;
Les figures 5a et 5b illustrent un autre exemple de deux blocs de données élémentaires insérés dans une feuille de calcul de logiciel tableur et liées ensemble selon l'invention ;
Les figures 6a et 6b illustrent un exemple du traitement effectué par la fonction d'extension selon l'invention.

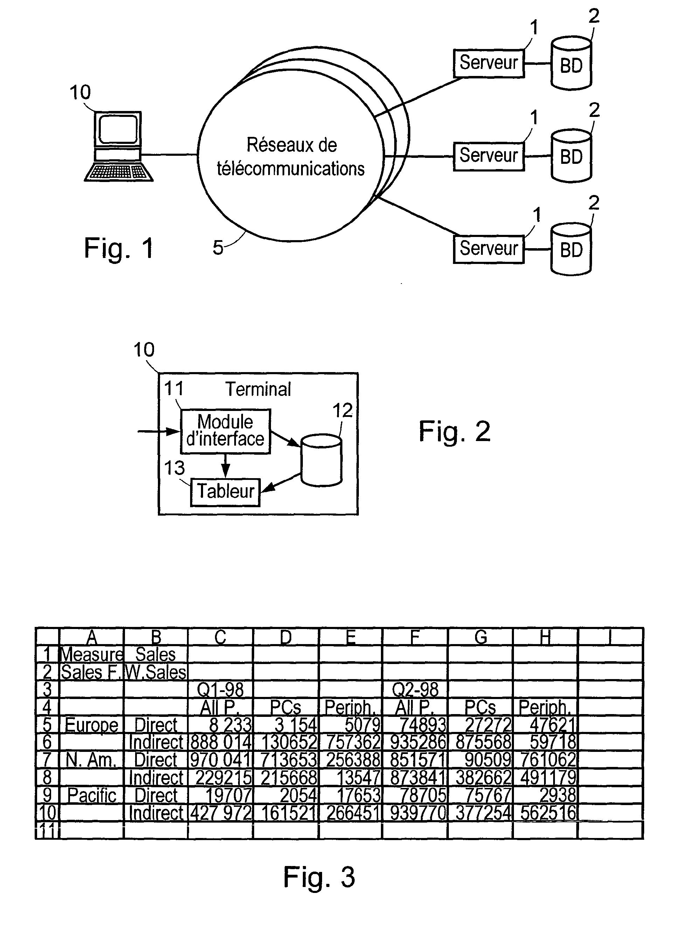

Le système représenté sur la figure 1 comprend un ensemble de serveurs 1 donnant accès à des bases de données multidimensionnelles 2 respectives. Les serveurs sont accessibles à des terminaux 10 d'utilisateurs par l'intermédiaire de réseaux 5 de télécommunications ou de transmission de données.

Tel que représenté sur la figure 2, chaque terminal 10 conçu pour accéder aux bases des données multidimensionnelles 2, est équipé d'un logiciel tableur 13 tel que Microsoft EXCEL conçu notamment pour traiter des données affichées en tableaux constitués de cellules réparties en lignes et en colonnes.
Pour pouvoir accéder aux bases de données multidimensionnelles 2 conformément au procédé selon l'invention, le terminal comprend en outre un module d'interface 11 conçu pour offrir à l'utilisateur des moyens de connexion et d'accès à des serveurs 1 de bases de données 2 par l'intermédiaire d'un réseau 5, des moyens de sélection dans les bases de données accédées d'ensembles de données ou blocs de données élémentaires, et des moyens pour transférer dans une base de données locale 12 les blocs de données élémentaires sélectionnés.

Selon l'invention, chaque bloc de données élémentaire extrait d'une base de données multidimensionnelle et mémorisé dans la base de données locale 12 regroupe des données et des méta-données décrivant la structure des données, et notamment :
- un identifiant du bloc de données élémentaire,
- un identifiant de la base de données multidimensionnelle 2 d'où est extraite le bloc de données élémentaire,
- des informations de connexion via un réseau 5, au serveur 1 donnant accès à la base de données 2, ces informations comprenant un identifiant du serveur 1 dans le réseau 5, tel qu'une adresse URL et des informations d'autorisation d'accès, telles qu'un identifiant et un mot de passe d'utilisateur,
- une collection d'objets "dimension" définissant chacun une des dimensions du cube,
- des objets "axe horizontal", "axe vertical", et "axe page" entre lesquels sont réparties les dimensions du bloc de données élémentaire,
- une collection d'objets rassemblant les données extraites de la base de données 2, et
- un identifiant d'une cellule de départ dans la feuille de calcul du logiciel tableur, à partir de laquelle est inséré le tableau de données extraites, chaque cellule de ce tableau contenant une formule qui pointe sur une donnée respective du bloc de données élémentaire mémorisé dans la base de données locale, et qui affiche sa valeur dans la cellule.

Chacune des dimensions d'un bloc de données élémentaire rassemble les informations suivantes :
- un identifiant de la dimension,
- une collection de hiérarchies,
- un identifiant de la hiérarchie par défaut,
- un identifiant de la hiérarchie sélectionnée,
- une collection de niveaux hiérarchiques pour toutes les hiérarchies définies pour la dimension,
- un ensemble de propriétés de la dimension,
- une liste de propriétés sélectionnées par l'utilisateur,
- une séquence de critères de sélection à appliquer successivement aux éléments ou membres de la dimension,
- les résultats obtenus pour la dimension en appliquant les critères de sélection, ces résultats contenant les libellés des membres de la dimension à afficher.

Ainsi, par exemple pour une dimension "Client", on peut avoir deux hiérarchies : une hiérarchie qui regroupe les clients en fonction de leur localisation géographique respective, et une autre par type d'activité. Les deux hiérarchies peuvent avoir des niveaux hiérarchiques communs ou distincts. Le niveau "Client élémentaire" est un niveau commun aux deux hiérarchies. Dans la hiérarchie "Géographie", on peut trouver un regroupement des clients élémentaires par région (ou niveau "région"), par pays (ou niveau "pays") par zone (ou niveau "zone"). Dans la hiérarchie "Activité", on peut trouver par exemple, les niveaux "type d'activité" et "catégorie de type d'activité", les trois membres de ce dernier niveau pouvant être "Services", "Industrie" et "Autre").

Chaque objet hiérarchie comprend un identifiant de la hiérarchie, et un identifiant du membre ou valeur par défaut de la hiérarchie.

Chaque objet niveau comprend un identifiant du niveau et un nombre entier définissant la profondeur du niveau.

Chaque objet critère de sélection d'un objet dimension comprend un type de sélection associé à une liste d'objets et un verbe de combinaison permettant de définir un mode de combinaison à appliquer vis-à-vis d'autres critères de sélection définis précédemment dans la séquence de critères de sélection pour la dimension.

Les types possibles pour un objet critère de sélection sont les suivants :
- liste : contient la liste des membres ou valeurs de la dimension, retenus par l'utilisateur,
- niveau : contient la liste des niveaux retenus par l'utilisateur,
- top/bottom : introduit un seuil supérieur ou inférieur au delà ou en deçà duquel les valeurs doivent être retenues,
- condition : introduit une condition que doivent vérifier les valeurs à retenir,
- comparaison : introduit une condition de comparaison entre deux valeurs que doivent vérifier les valeurs à retenir,
- propriété : introduit une valeur de propriété que doivent posséder les valeurs à retenir,
- chaîne de caractères : introduit une condition portant sur une chaîne de caractères que doivent vérifier les valeurs à retenir,
- tri : introduit une commande de tri à appliquer aux valeurs retenues,
- hiérarchie : indique que les ascendants ou descendants des membres sélectionnés doivent être retenus,
- liste définie sur le serveur : permet de faire référence à une liste définie dans la base de données,
- liste statique : permet de faire référence à une liste définie par l'utilisateur,
- liste dynamique : permet de faire référence à une autre série de critères de sélection réévaluée à chaque exécution des critères de sélection,
- utilisateur : fait appel à une sélection qui doit être introduite par l'utilisateur au moment de l'exécution des critères de sélection.

Le verbe de combinaison peut prendre les valeurs suivantes :
- ajouter : pour ajouter les membres d'une dimension correspondant au critère associé aux membres déjà sélectionnés par les critères précédents dans la séquence de critères de sélection,
- garder : pour conserver uniquement parmi les membres précédemment sélectionnés ceux qui correspondent au critère de sélection associé,
- enlever : pour retirer des membres qui ont été précédemment sélectionnés, ceux qui correspondent au critère associé,
- trier : pour trier les membres précédemment sélectionnés en appliquant le critère de tri associé.

Chaque valeur extraite de la base de données distante et insérée dans la base de données locale 12 est associée à un objet format définissant le format de la valeur.

Le module d'interface 11 est conçu pour permettre à l'utilisateur de sélectionner un serveur 1 et une base de données 2, et pour se connecter à la base de données ainsi sélectionnée. Une fois connecté, le module d'interface 11 est conçu pour obtenir du serveur toutes les informations de structure de la base de données, à savoir notamment les informations relatives aux dimensions de la base de données. Ces informations de structure sont ensuite affichées à l'écran du terminal pour permettre à l'utilisateur de sélectionner dans la base de données un bloc de données élémentaire se présentant sous la forme d'un cube à plusieurs dimensions. Les informations de structure sont rangées dans la base de données locale 12 pour le bloc de données élémentaire sélectionné par l'utilisateur.

Les informations de sélection introduites par l'utilisateur sont également mémorisées dans la base de données locale 12 dans des objets "critère de sélection" du bloc de données élémentaire sélectionné, pour chacune de ses dimensions.

Le module d'interface 11 est par exemple activé à partir d'un bouton de commande prévu dans le logiciel tableur 13. La cellule courante de la feuille de calcul où se trouve le curseur du logiciel tableur est considérée comme la cellule d'origine (située en haut et à gauche) par défaut du tableau de données extraites de la base de données qui est inséré dans la feuille de calcul.

Le module d'interface connecte le terminal au serveur 1 d'accès à la base de données distante 2 en utilisant les informations de connexion mémorisées pour le bloc de données élémentaire dans la base de données locale 12. A la suite de la connexion du terminal à la base de données 2 sélectionnée, le module d'interface affiche à l'écran du terminal 10 une fenêtre comprenant trois zones pour chacun des trois axes page, ligne et colonne, destinées à recevoir des identifiants de dimensions de la base de données, que l'utilisateur souhaite disposer respectivement en page, en ligne et en colonne.

Dans l'exemple de la figure 3, la base de données multidimensionnelle auquel l'utilisateur a accédé comprend les dimensions suivantes :
- "Measure", "Sales F." disposées sur l'axe page,
- "Geographie" et "Type Client" disposées sur l'axe ligne, et
- "Time" et "Products" disposées sur l'axe colonne.

L'utilisateur est ensuite invité par le module d'interface à introduire les critères de sélection des données à extraire de la base de données pour chacune des dimensions de celle-ci.

Dans l'exemple de la figure 3, l'utilisateur a ainsi sélectionné :
- pour la dimension "Time" les membres "Q1-98" et "Q2-98",
- pour la dimension "Products" les membres "All P.", "PCs" et Periph.",
- pour la dimension "Geographie" les membres "Europe", "N. Am" et "Pacific", et
- pour la dimension "Type Client" les membres "Direct" et "Indirect".

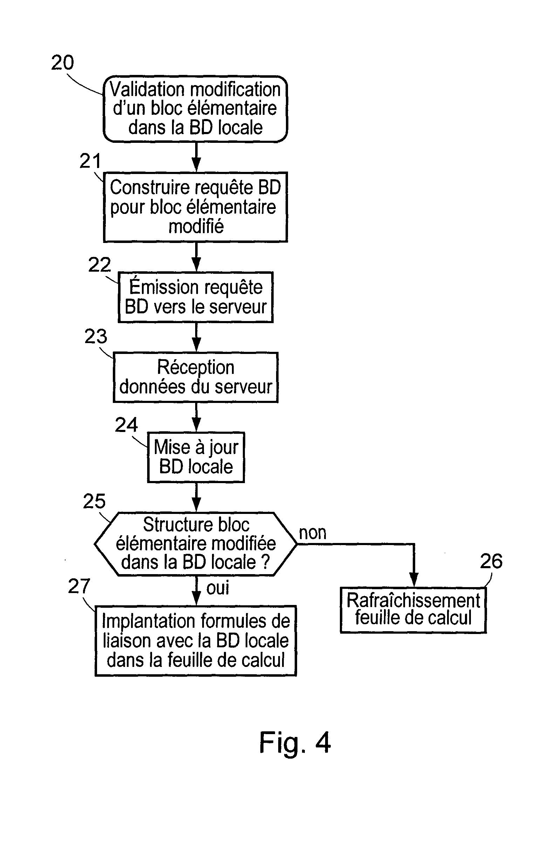

La validation des informations de sélection ainsi introduites par l'utilisateur déclenche la procédure 20 illustrée sur la figure 4.

Cette procédure comprend tout d'abord une étape 21 de construction d'une requête d'accès à la base de données 2 à partir des informations introduites par l'utilisateur et mémorisées dans un objet bloc de données élémentaire dans la base de données locale 12. Cette requête est de la forme :
*SELECT*
*<syntaxe de définition de la logique de sélection des membres des dimensions en colonnes> ON COLUMNS,*
*<syntaxe de définition de la logique de sélection des membres des dimensions en lignes> ON ROWS*
*FROM <NOM DU CUBE>*
*WHERE <membres des dimensions en page servant de filtre>*

La première partie de la requête (syntaxe de définition de la logique de sélection des membres des dimensions en colonnes) est déterminée à partir de la collection des dimensions attribuées à l'axe colonne. Pour chacun des objets dimension figurant dans cette collection, le module d'interface recherche les objets critères de sélection attribués à cet objet dimension et génère une commande de sélection dans la syntaxe de commande de la base de données 2 à partir de chacun des objets critère de sélection trouvés dans la base de données locale pour les objets dimensions de l'axe colonne.

Cette procédure est ensuite appliquée aux objets dimensions affectés à l'axe ligne pour déterminer la syntaxe de définition de la logique de sélection des membres des dimensions en lignes.

La dernière partie de la commande (membres des dimensions en page servant de filtre) reprend les critères de sélection à appliquer aux objets dimension attribués à l'axe page.

Une fois que la requête est construite, le module d'interface 11 lance l'exécution de la requête en la transmettant au serveur 1 associé à la base de données 2 à laquelle il est connecté (étape 22).

A l'étape suivante 23, le module 11 reçoit du serveur 1 la réponse correspondant à la requête émise et contenant les données extraites de la base de données 2.

A l'étape suivante 24, les données reçues sont rangées dans la base de données locale 12 en association avec les autres informations relatives au bloc de données élémentaire traité.

A l'étape suivante 25, si la structure des données stockées dans la base de données locale pour le bloc de données élémentaire en cours de traitement n'est pas modifiée, le module d'interface transmet au logiciel tableur un ordre de rafraîchissement des cellules du tableau (étape 26) qui consiste simplement à faire exécuter par le logiciel tableur les différentes formules insérées dans la feuille de calcul. S'il s'agit au contraire d'une première extraction de données ou d'une nouvelle extraction dans laquelle les données extraites présentent une structure modifiée par rapport aux données extraites lors d'une exécution de requête précédente, le module d'interface 11 insère dans chacune des cellules du tableau présenté dans la feuille de calcul une formule de liaison pour que le logiciel tableur affiche la valeur extraite correspondante mémorisée dans la base de données locale 12 (étape 27). Ces formules de liaison concernent à la fois les valeurs à afficher dans les cellules du tableau, et les libellés des dimensions et des membres des dimensions du bloc de données élémentaire, affichés dans la feuille de calcul, conformément à l'exemple illustré par la figure 3.

L'utilisateur peut ainsi définir plusieurs blocs de données élémentaires à extraire d'une ou plusieurs bases de données 2, et les présenter sous la forme de tableaux dans une feuille de calcul, et à l'aide du logiciel tableur, leur associer une présentation et des formules de calcul portant sur les données extraites.

Avantageusement, il est prévu une fonction permettant de lier entre eux plusieurs blocs de données élémentaires extraits de la même base de données 2 ou de bases de données différentes, de manière à ce qu'ils présentent une ou plusieurs dimensions en commun et que les critères de sélection appliqués aux dimensions en commun d'un bloc de données élémentaire dit "maître" soient utilisés aussi pour sélectionner les données à extraire d'un autre bloc de données élémentaire dit "esclave".

A cet effet, le module d'interface est conçu pour offrir à l'utilisateur la possibilité de lier des objets dimension du bloc de données élémentaire esclave à des objets dimension d'un bloc de données élémentaire maître. Pour cela, le module d'interface permet de sélectionner un bloc de données élémentaire maître et un bloc de données élémentaire esclave. Une fois cette sélection effectuée par l'utilisateur, le module d'interface affiche les identifiants des objets dimension de chacun des ensembles de données dans deux fenêtres séparées et offre à l'utilisateur la possibilité de lier des dimensions du bloc de données élémentaire maître avec des dimensions du bloc de données élémentaire esclave.

Ces informations sont mémorisées sous la forme d'un type de critère de sélection supplémentaire défini pour chaque dimension liée du bloc élémentaire esclave, et qui est associé à une référence aux critères de sélection définis pour la dimension liée du bloc de données élémentaire maître.

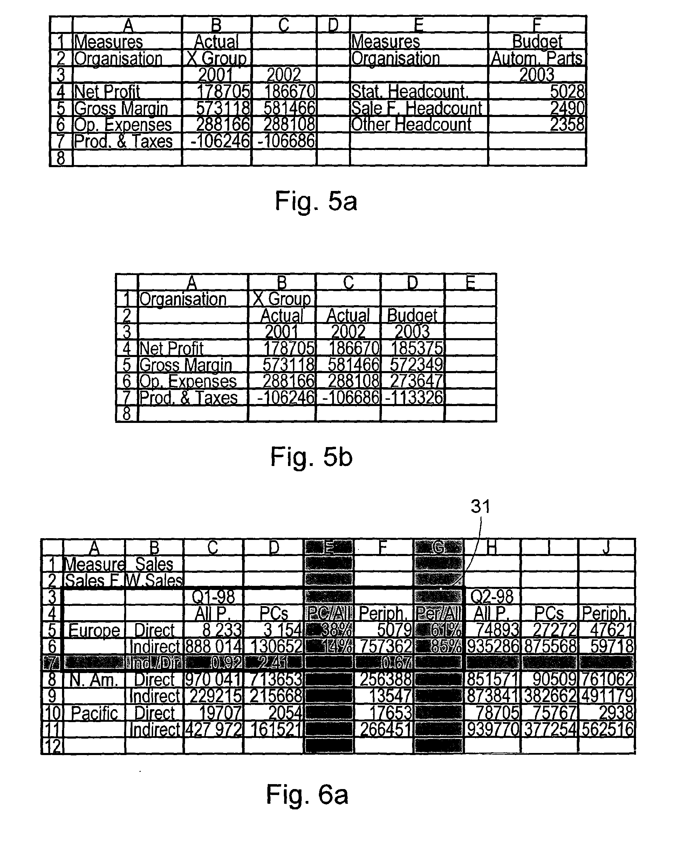

Dans l'exemple illustré sur la figure 5a, l'utilisateur a inséré dans une feuille de calcul deux blocs élémentaires, le premier bloc étant inséré dans les colonnes A à C et le second bloc dans les colonnes E et F. Les données affichées de ces deux blocs élémentaires sont incohérentes. Pour obtenir une cohérence, l'utilisateur peut par exemple lier entre elles les dimensions "Rubrique" situées sur l'axe ligne des deux blocs, et les dimensions "Organisation" situées sur l'axe page des deux blocs, le second bloc étant le bloc esclave du premier bloc maître.

Une fois que l'utilisateur a ainsi désigné les dimensions à lier, le module d'interface associe dans la base de données locale 12 chaque objet dimension du bloc de données élémentaire esclave lié à un objet dimension du bloc de données élémentaire maître, à l'aide d'un lien de référence désignant l'objet dimension du bloc de données élémentaire maître auquel il est lié. Ce lien de référence peut par exemple être réalisé en prévoyant un type de critère de sélection particulier de type lien vers un autre bloc de données élémentaire, indiquant au module d'interface 11 qu'il doit reprendre les critères de sélection définis pour un objet dimension d'un autre bloc de données élémentaire. Ce type de critère doit donc être associé à un identifiant du bloc de données élémentaire maître et un identifiant de dimension de ce bloc de données élémentaire maître.

Lors de l'exécution de l'étape 21 de construction de la requête d'extraction du bloc de données élémentaire, si le module d'interface rencontre dans la structure du bloc de données élémentaire pour lequel il construit la requête d'extraction un objet critère de sélection de type lien vers un autre bloc de données élémentaire, il recherche dans la base de données locale 12, le bloc de données élémentaire et l'objet dimension de ce bloc de données élémentaire désignés par le critère de sélection de type lien vers un autre bloc de données élémentaire, et intègre dans la requête les critères de sélection définis par les objets critères de sélection associés à la dimension du bloc de données élémentaire maître ainsi désigné. Les critères de sélection pour une dimension liée d'un bloc de données élémentaire esclave qui sont pris en compte pour établir la requête à la base de données 2 sont ceux de la dimension liée du bloc de données élémentaire maître.

Pour assurer la cohérence des deux ensembles de données, il faut en outre reprendre la sélection de dimensions attribuée à l'axe page du bloc de données élémentaire maître.

On peut en outre changer les propriétés de visualisation du bloc esclave pour ne par afficher les libellés des membres des dimensions liées, ceux-ci étant affichés pour le bloc maître, ou inversement pour afficher les libellés au milieu du tableau regroupant le bloc maître et le bloc esclave.

L'exécution de la requête du second bloc (esclave) dans l'exemple de la figure 5a permet d'obtenir le tableau illustré par la figure 5b. Les données issues du bloc esclave étant disposées dans la colonne D. L'utilisateur peut ensuite changer les critères de sélection de la dimension "Rubrique" en ligne ou de la dimension "organisation" "en page et obtenir des résultats cohérents entre les deux blocs élémentaires.

Bien entendu, la procédure qui vient d'être décrite est transitive car le bloc de données élémentaire maître peut lui-même être esclave d'un autre bloc de données élémentaire maître. Pour éviter un bouclage infini de cette procédure, le module d'interface 11 est conçu pour détecter toute "référence circulaire" et le signaler à l'utilisateur.

Cette procédure est également exécutée pour tous les blocs de données élémentaires esclaves d'un bloc de données élémentaire maître dont les critères de sélection ont été modifiés.

Dans le cas d'une réexécution de requête d'extraction d'un bloc de données élémentaire, on distingue le cas où la structure du bloc de données élémentaire n'est pas modifiée, mais où le nombre de membres extraits des dimensions affichées est modifié (nombre de lignes et/ou de colonnes du tableau inséré dans la feuille de calcul est modifié). Dans ce cas, la mise à jour du tableau inséré dans la feuille de calcul est effectuée de manière à ne pas affecter les cellules de la feuille de calcul situées en dehors du tableau avant sa mise à jour. Ainsi, l'utilisateur peut insérer dans la feuille de calcul en dehors du tableau inséré des formules de calcul portant sur les valeurs affichées dans le tableau et faire réexécuter la requête en changeant des critères de sélection, tout en conservant les formules qu'il a introduites, et la présentation des cellules du tableau qu'il a définie à l'aide du logiciel tableur.

Par contre, s'il insère dans le tableau des lignes ou des colonnes de calculs intermédiaires, celles-ci sont effacées à la réexécution de la requête si la structure du bloc de données extrait est modifiée ou si le nombre de membres d'une dimension a changé.

En outre, si l'utilisateur souhaite appliquer la même formule ou le même ensemble de formules à tous les membres d'une dimension, il doit insérer manuellement l'ensemble de formules en ligne ou en colonne autant de fois qu'il y a de membres dans la dimension considérée. Cette opération est fastidieuse et son résultat est éphémère si la requête d'extraction est réexécutée et fournit un bloc de données de structure modifiée ou avec un nombre de membres modifié pour une dimension.

Pour conserver les lignes et les colonnes insérées, certains langages de requête à une base de données multidimensionnelle prévoient la possibilité d'insérer des formules de calcul dans une requête d'extraction. Dans ce cas, les calculs ainsi définis sont effectués par la base de données à la volée lors de l'exécution de la requête. Ces formules de calcul sont multidimensionnelles et exécutées pour tous les membres des dimensions concernées. Elles doivent être conformes à une syntaxe particulière qui est d'autant plus complexe qu'elle est puissante pour répondre aux besoins des utilisateurs.
De ce fait, la plupart des langages de requête s'avèrent inaccessibles aux non spécialistes des bases de données multidimensionnelles.

Pour résoudre ce problème, la présente invention prévoit une fonction supplémentaire d'extension du calcul multidimensionnel aux formules locales du tableur insérées par l'utilisateur. Pour atteindre cet objectif, le module d'interface est conçu pour dupliquer automatiquement un ensemble de cellules appelé "instance" en modifiant les références des données issues de la base de données locale. Une instance regroupe les cellules de la feuille de calcul qui ont en commun un membre de chaque dimension en ligne et/ou en colonne pour laquelle la fonction d'extension a été activée, ainsi que les formules de calcul insérées par l'utilisateur et portant sur ces valeurs.

L'instance de référence qui est dupliquée par la fonction d'extension est la première instance, c'est-à-dire le premier membre de chacune des dimensions où la fonction d'extension est active et toutes les valeurs correspondant à ces membres pour toutes les autres dimensions, ainsi que les formules de calcul insérées par l'utilisateur et portant sur ces valeurs.

La duplication est ainsi effectuée pour toutes les autres instances des dimensions où la fonction d'extension est active.
Pour insérer des formules de calcul dans un tableau de bloc élémentaire inséré dans une feuille de calcul, il suffit donc d'insérer dans l'ensemble de cellules de la première instance de nouvelles lignes et/ou colonnes, ainsi que les formules de calcul souhaitées, et le module d'interface effectue la duplication de cette première instance pour propager les modifications effectuées par l'utilisateur aux autres membres des dimensions où la fonction d'extension est active. L'objectif de calcul multidimensionnel local est ainsi atteint.

Le module d'interface 11 est conçu pour permettre à l'utilisateur de sélectionner des objets dimension d'un bloc de données élémentaire mémorisé dans la base de données locale 12 et de spécifier qu'il souhaite appliquer cette fonction d'extension aux dimensions sélectionnées. Un indicateur d'activation de la fonction d'extension est mémorisé dans la base de données locale 12 en association avec chaque objet dimension.

Bien entendu, cette fonction n'est pas active à la première exécution d'une requête d'extraction d'un ensemble de données et suppose que l'utilisateur a déjà exécuté la requête du bloc de données élémentaire et modifié le tableau inséré dans la feuille de calcul pour ce bloc élémentaire pour y insérer des lignes et/ou des colonnes supplémentaires contenant des formules de calcul, dans la première instance des dimensions sélectionnées pour exécuter la fonction d'extension de calcul multidimensionnel.

Si l'on reprend l'exemple de la figure 3, l'utilisateur a exécuté une première fois la requête du bloc élémentaire pour obtenir le tableau illustré par cette figure. Ensuite il modifie ce tableau pour obtenir le tableau représenté sur la figure 6a. Dans ce tableau l'utilisateur a inséré la ligne 7 dans laquelle il a ajouté en colonne B le libellé "Ind./Dir" et en colonne C la formule C5/C6. Il a ensuite recopié cette formule dans les colonnes D et E (dans la figure 3) pour appliquer cette formule également sur les valeurs de ces colonnes. Les lignes suivantes ont été automatiquement renumérotées par le logiciel tableur. En recopiant cette formule, le logiciel tableur l'a transformée automatiquement en D5/D6 et E5/E6.
Ensuite l'utilisateur a inséré les colonnes E et G (figure 6a) dans lesquelles il a inséré les libellés PC/All et Per/All en ligne 4, et en lignes 5 et 6 des formules du type 100*D5/C5 et 100*D6/C6 pour la colonne E et 100*F5/C5 et 100*F6/C6 pour la colonne G.
L'utilisateur active ensuite la fonction d'extension aux dimensions "Time" et "Geographie".

Lors de la réexécution de la requête associée au bloc de données élémentaire, le module de calcul analyse la feuille de calcul en tenant compte des dimensions pour lesquelles l'utilisateur a activé la fonction d'extension, pour déterminer la plage de cellules correspondant à la première instance de ces dimensions, lit les valeurs et formules contenues dans cette plage de cellules et copie ces valeurs et formules dans la feuille de calcul autant de fois qu'il y a de membres dans chacune des dimensions pour lesquelles la fonction d'extension est activée. Avant chaque copie, il modifie les formules d'insertion des valeurs du bloc élémentaire pour pointer sur les membres et les données du membre correspondant.

Par ailleurs, lors de cette insertion, le logiciel tableur effectue automatiquement la modification des formules de calcul insérées par l'utilisateur pour les faire porter sur les cellules de la nouvelle instance.

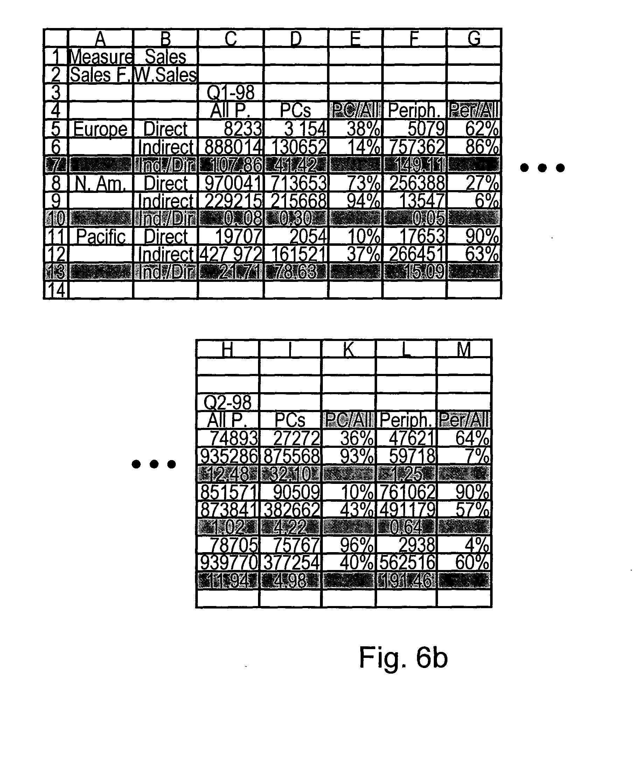

Ainsi dans l'exemple de la figure 6a, la première instance à recopier est délimitée par le rectangle 31 en traits épais. Le module d'interface duplique cette instance pour tous les membres des dimensions où la fonction d'extension a été activée, en faisant appel à la fonction de recopie du logiciel tableur et en modifiant les formules d'insertion de valeurs de la base de données locale. Ce qui permet d'obtenir le tableau illustré par la figure 6b.
Par exemple, le module d'interface commence par copier l'instance pour tous les membres des dimensions sur l'axe colonne, c'est-à-dire dans l'exemple de la figure 6c, pour toutes les périodes, puis il duplique la première instance associée aux instances qui viennent d'être copiées pour tous les membres des dimensions sur l'axe ligne, c'est-à-dire dans l'exemple de la figure 6c, pour tous les membres des dimensions "Geographie" et "Rubrique".

Bien entendu, si à la suite d'une modification des critères de sélection associés aux dimensions, le nombre de membres de ces dimensions est modifié, le module d'interface adapte en conséquence le nombre de copies de la première instance à effectuer dans la feuille de calcul. Par exemple si le nombre de périodes à afficher est modifié, les colonnes C à G sont dupliquées autant de fois qu'il y de périodes en reprenant bien sûr toutes les valeurs et les libellé des membres des dimensions correspondant à la période dans la base de données locale.

Grâce à ces dispositions, le procédé selon l'invention exploite les avantages des logiciels tableur qui sont largement utilisés en bureautique par des utilisateurs qui ne sont en général pas spécialistes des bases de données. Un premier avantage de ce type de logiciel, exploité par l'invention, réside dans les fonctions de calcul qui permettent de définir facilement des calculs portant sur les données affichées dans les cellules, ces calculs pouvant être complexes tout en étant à la portée d'un simple utilisateur de logiciel tableur. Un autre avantage exploité par l'invention réside dans la fonction copier/coller qui met à jour automatiquement les références aux cellules se trouvant dans les formules de calcul dupliquées en fonction de la position de la cellule où est copiée la formule.

## Revendications

1. Procédé de manipulation de données mémorisées dans au moins une base de données multidimensionnelle (2) dans laquelle des données sont organisées selon plusieurs dimensions,
**caractérisé en ce qu'**il comprend des étapes consistant à :
- générer (21) une requête d'extraction de données d'une base de données multidimensionnelle (2) à partir de critères de sélection introduits par un utilisateur portant sur au moins une partie des dimensions de la base de données multidimensionnelle,
- exécuter (22) la requête d'extraction de données sur la base de données multidimensionnelle pour recevoir (23) des données extraites de la base de données multidimensionnelle et correspondant aux critères de sélection introduits par l'utilisateur,
- mémoriser (24) dans une base de données locale (12) les données reçues sous la forme d'un bloc de données élémentaire, et
- insérer dans chacune des cellules d'un tableau d'une feuille de calcul d'un logiciel tableur (13), une formule d'affichage d'une donnée qui pointe sur une donnée respective du bloc de données élémentaire mémorisé dans la base de données locale.

2. Procédé selon la revendication 1,
**caractérisé en ce que** les critères de sélection introduits par l'utilisateur pour un bloc de données élémentaire extrait sont mémorisés dans la base de données locale (12) en association avec les données extraites et mémorisées du bloc de données élémentaire.

3. Procédé selon la revendication 1 ou 2,
**caractérisé en ce qu'**il comprend des étapes de génération et d'exécution de plusieurs requêtes d'extraction de données, en fonction de critères de sélection introduits par l'utilisateur pour recevoir plusieurs blocs de données élémentaires, chacun des blocs de données élémentaires extraits étant mémorisés dans la base de données locale (12), et inséré sous la forme d'un tableau respectif dans la feuille de calcul en fonction des critères de sélection introduits par l'utilisateur pour chacun des blocs de données élémentaires extraits.

4. Procédé selon la revendication 3,
**caractérisé en ce qu'**il comprend une étape de liaison d'au moins une dimension d'un bloc de données élémentaire esclave à un bloc de données élémentaire maître, la génération de la requête d'extraction du bloc de données élémentaire esclave intégrant les critères de sélection appliqués à la dimension liée du bloc de données élémentaire maître.

5. Procédé selon la revendication 4,
**caractérisé en ce que** si la dimension liée du bloc de données élémentaire maître est elle-même liée à une dimension d'un autre bloc de données élémentaire, les critères de sélection appliqués à la dimension de l'autre bloc de données élémentaire sont appliqués à la dimension liée du bloc de données élémentaire esclave.

6. Procédé selon la revendication 4 ou 5,
**caractérisé en ce qu'**à chaque fois qu'un critère de sélection d'une dimension liée d'un bloc de données élémentaire maître est modifié, les requêtes d'extraction des blocs de données élémentaires esclaves du bloc de données élémentaire maître sont à nouveau générées et exécutées pour mettre à jour les cellules des tableaux de données des blocs de données élémentaires insérés dans la feuille de calcul.

7. Procédé selon l'une des revendications 1 à 6,
**caractérisé en ce qu'**il comprend en outre une procédure d'extension de calcul multidimensionnel à au moins une dimension d'un bloc de données élémentaire, comprenant une étape d'identification dans la feuille de calcul d'un ensemble de cellules regroupant des cellules contenant des formules d'affichage d'une donnée qui pointent sur des données respectives d'un bloc de données élémentaire, correspondant à un premier membre respectif de chacune des dimensions du bloc élémentaire pour laquelle la procédure d'extension a été activée, et des cellules insérées par l'utilisateur, et des étapes de duplication de l'ensemble de cellules identifié, effectuées pour chacun des membres de chacune des dimensions pour laquelle la procédure d'extension a été activée, chaque duplication étant effectuée en modifiant les formules d'affichage des données du bloc de données élémentaire, appartenant à l'ensemble de cellules identifié, pour insérer des données du bloc élémentaire correspondant aux membres pour lesquels la duplication est effectuée.

8. Procédé selon la revendication 7,
**caractérisé en ce que** les cellules insérées par l'utilisateur dans l'ensemble de cellules identifié contiennent au moins en partie des formules de calcul référençant des cellules de l'ensemble de cellules identifié, la duplication de l'ensemble de cellules identifié étant effectuée en mettant à jour les références des cellules figurant dans les formules de calcul insérées par l'utilisateur en fonction de l'emplacement dans la feuille de calcul où est inséré l'ensemble identifié.

9. Système pour la manipulation de données mémorisées dans au moins une base de données multidimensionnelle (2) dans laquelle des données sont organisées selon plusieurs dimensions,
**caractérisé en ce qu'**il comprend un module d'interface (11) couplé à un logiciel tableur (13) et ayant accès à au moins une base de données multidimensionnelle (2), pour extraire des blocs de données élémentaires de la base de données multidimensionnelle et les insérer dans un tableau d'une feuille de calcul du logiciel tableur, et une base de données locale (12) dans laquelle le module d'interface range les données des blocs de données élémentaires extraits, le module d'interface comprenant :
- des moyens pour générer des requêtes d'extraction de blocs de données élémentaires de la base de données multidimensionnelle à partir de critères de sélection introduits par un utilisateur portant sur au moins une partie des dimensions de la base de données multidimensionnelle,
- des moyens pour faire exécuter par la base de données multidimensionnelle les requêtes d'extraction générées,
- des moyens pour recevoir les blocs de données élémentaires extraits et les mémoriser dans la base de données locale, et
- des moyens pour insérer dans chacune des cellules du tableau une formule d'affichage d'une donnée qui pointe sur une donnée respective du bloc de données élémentaire mémorisé dans la base de données locale.

10. Système selon la revendication 9,
**caractérisé en ce que** les bases de données multidimensionnelles (2) sont accessibles au module d'interface (11) par l'intermédiaire de réseaux de transmission de données (5).

11. Système selon la revendication 9 ou 10,
**caractérisé en ce que** la base de données locale (12) mémorise plusieurs blocs de données élémentaire extraits de bases de données multidimensionnelles (2), le module d'interface (11) comprenant des moyens pour permettre à l'utilisateur de lier entre elles au moins une dimension d'un bloc de données élémentaire esclave à une dimension correspondante d'un bloc de données élémentaire maître, et des moyens pour intégrer les critères de sélection appliqués à la dimension liée du bloc de données élémentaire maître dans la requête d'extraction du bloc de données élémentaire esclave.

12. Système selon l'une des revendications 9 à 11,
**caractérisé en ce que** le module d'interface (11) comprend en outre des moyens pour rechercher tous les blocs élémentaires mémorisés dans la base de données locale qui comprennent au moins une dimension liée à un bloc élémentaire maître lorsqu'un critère de sélection de la dimension liée correspondante du bloc élémentaire maître est modifiée, des moyens pour générer et exécuter les requêtes d'extraction des blocs élémentaires esclaves trouvés et des moyens pour mettre à jour les cellules des tableaux de données des blocs élémentaires insérés dans la feuille de calcul, à la suite de l'exécution des requêtes d'extraction.

13. Système selon l'une des revendications 9 à 12,
**caractérisé en ce qu'**il comprend en outre des moyens d'identification dans la feuille de calcul d'un ensemble de cellules regroupant des cellules contenant des formules d'affichage d'une donnée pointant sur une donnée respective d'un bloc de données élémentaire, correspondant à un premier membre respectif d'au moins une dimension du bloc élémentaire pour laquelle une procédure d'extension de calcul multidimensionnel a été activée, et des cellules insérées par l'utilisateur, des moyens de duplication de l'ensemble de cellules identifié pour chacun des membres de chacune des dimensions pour laquelle la procédure d'extension a été activée, chaque duplication étant effectuée en modifiant les formules d'affichage de données du bloc de données élémentaire, appartenant à l'ensemble de cellules identifié, pour pointer sur des données du bloc élémentaire correspondant aux membres pour lesquels la duplication est effectuée.

14. Système selon l'une des revendications 9 à 13,
**caractérisé en ce que** les cellules insérées par l'utilisateur dans l'ensemble de cellules identifié contient des formules de calcul référençant des cellules de l'ensemble de cellules identifié, la duplication de l'ensemble de cellules identifié étant effectuée en mettant à jour les références des cellules figurant dans les formules de calcul insérées par l'utilisateur en fonction de l'emplacement dans la feuille de calcul où est copié l'ensemble identifié.
